# FASCICULE DE BREVET EUROPEEN

(11) **EP 1 933 629 B1**
(45) Date de publication et mention de la délivrance du brevet: **29.07.2009**
(21) Numéro de dépôt: 06820267.0
(22) Date de dépôt: 09.10.2006
(51) Int. Cl.: A22B 3/02

(54) **DISPOSITIF ET PROCEDE POUR ETOURDIR LES ANIMAUX DANS LES ABATTOIRS**
VORRICHTUNG UND VERFAHREN ZUM BETÄUBEN VON TIEREN IN SCHLACHTHÄUSERN
DEVICE AND METHOD FOR STUNNING ANIMALS IN SLAUGHTER HOUSES

(30) Priorité: 10.10.2005 FR 0553074
(43) Date de publication de la demande: 25.06.2008
(73) Titulaire: Termet Solefi, 72470 Champagne (FR)
(72) Inventeur: RODRIGUES, Mario, 72190 Coulaines (FR)
(74) Mandataire: Tanty, François
(86) Numéro de dépôt international: PCT/FR2006/051005
(87) Numéro de publication internationale: WO 2007/042722

(56) Documents cités:
- WO-A-01/60168
- AU-A- 4 139 685
- FR-A- 907 815
- GB-A- 206 090
- US-A- 4 625 442
- [Online] juin 2001 (2001-06), , XP002385693 Extrait de l'Internet: URL:http://www.bfr.bund.de/cm/208/tierschu tzgerechte_bolzenschussbetaeubung.pdf> [extrait le 2006-06-16] page 2, alinéa 2

## Description

La présente invention concerne les dispositifs et procédés (cf. GB-A- 206 090) pour assommer les animaux dans les abattoirs.

L'invention peut s'appliquer à des mammifères tels que des bovins, veaux, vaches, ovins, moutons, porcs ou chevaux, cette liste n'étant toutefois pas limitative.

Il est connu d'assommer les bovins en projetant une masse de forme convexe sur la tête de l'animal par un système pneumatique ou autre. L'usage d'une telle masse provoque un écrasement de la boîte crânienne qui s'accompagne d'un risque d'hématome sur la cervelle et de la dissémination d'agents infectieux dans le sang.

Une autre technique consiste à anesthésier les animaux à l'aide d'un pistolet à charge explosive ou par système pneumatique muni d'une broche perforante. Ces systèmes, lors de la perforation du crâne de l'animal, peuvent provoquer un risque de projection de matières provenant du cerveau. Ces matières présentent un risque sanitaire et dans bien des cas viennent polluer le masque de l'animal.

Or, ce masque est constitué par un cuir fin qui présente une valeur marchande élevée et qu'il convient donc de préserver.

De plus, le cerveau fait partie des organes susceptibles d'être contaminés par le prion de l'ESB, de sorte que toute projection de matières provenant du cerveau est à éviter pour des raisons d'hygiène.

En cas de contamination du masque de l'animal, celui-ci doit être détruit en tant que déchet dangereux, ce qui peut s'avérer relativement coûteux.

Le brevet US 5 692 951 divulgue un procédé dans lequel on utilise une broche perforante ayant une extrémité coupante pour percer la boîte crânienne, traverser les sinus crâniens et atteindre le cerveau.

La société déposante commercialise également des pistolets d'abattage dans lesquels une broche perforante est, projetée à travers la boîte crânienne par l'explosion d'une cartouche.

L'utilisation d'une telle broche perforante crée, après son retrait, une ouverture par laquelle des matières contaminées risquent de s'écouler.

De plus, la broche vient en contact avec le cerveau et peut se charger en matières contaminées.

Il existe donc un besoin pour bénéficier d'un dispositif et d'un procédé pour assommer les animaux dans les abattoirs, notamment les bovins, remédiant à tout ou partie des inconvénients des dispositifs connus.

La présente invention y parvient en proposant un dispositif d'étourdissement d'animaux destinés à être abattus, encore appelé pistolet d'abattage, comportant une matrice destinée à être projetée contre la boîte crânienne de l'animal à étourdir, présentant un diamètre d'impact supérieur à 20 mm, et du côté destiné à être projeté contre la boîte crânienne, au moins une surface en creux.

L'invention a encore pour objet, selon un autre de ses aspects, un dispositif d'étourdissement comportant une matrice destinée à être projetée contre la boîte crânienne de l'animal à étourdir, présentant un diamètre d'impact supérieur à 20 mm et au moins une arête formant saillie du côté destiné à être projeté contre la boîte crânienne.

Cette arête est par exemple définie par l'intersection d'une surface cylindrique et d'une surface conique ou de deux surfaces coniques. L'angle au sommet de cette arête est par exemple inférieur ou égal à 90°.

L'arête peut définir, notamment en l'entourant, au moins une surface en creux.

La surface en creux peut avoir une profondeur comprise entre 1 et 25 mm, voire entre 1,5 et 22 mm, selon par exemple le type d'animal à étourdir.

Une profondeur relativement importante, par exemple supérieure à 10 mm, peut notamment être utile dans le cas de jeunes bovins ou de vaches, dont le crâne est relativement épais.

La profondeur de la surface en creux peut être comprise ente 10 et 25 mm, par exemple être de l'ordre de 20 mm pour une matrice destinée à être utilisée sur de jeunes bovins ou des vaches, et entre 1 et 10 mm, par exemple de l'ordre de 2 mm pour une matrice destinée à être utilisée sur des moutons ou des veaux.

Par « diamètre » il faut comprendre celui du cercle circonscrit à la matrice lorsque celle-ci est observée en section transversale, dans un plan perpendiculaire à la direction de déplacement. La matrice ne présente pas nécessairement un contour circulaire. Dans ce cas « diamètre » est alors synonyme de « plus grande dimension transversale ».

L'invention peut présenter plusieurs avantages, selon la forme donnée à la matrice. Celle-ci peut notamment être agencée pour découper la boîte crânienne à la manière d'un emporte-pièce et exercer, compte tenu de son diamètre relativement important, une pression sur la partie découpée qui provoque son enfoncement et donc par cascade une pression sur la cervelle de l'animal.

Cette partie découpée peut empêcher l'accès au cerveau, réduisant les risques de projection de matières à risque et évitant un contact de la matrice avec celles-ci.

Dans un exemple de mise en oeuvre de l'invention, la matrice comporte une arête à sa périphérie. Cette arête peut permettre d'exercer une action de découpe. La surface en creux précitée peut s'étendre à l'intérieur de la zone délimitée par l'arête et peut permettre d'exercer la pression nécessaire à l'enfoncement de la partie de boîte crânienne découpée par l'arête.

La matrice peut également comporter une arête qui ne se situe pas à sa périphérie, mais en retrait de celle-ci. Une telle arête peut découper une partie de la boîte crânienne et la matrice peut venir en appui, par une surface entourant l'arête, contre la boîte crânienne sur la région de bord de celle-ci entourant la partie découpée.

Cette région de bord se trouve affaiblie du fait de la découpe effectuée par l'arête, de sorte qu'une énergie moindre est nécessaire pour provoquer son effondrement. Ainsi, un tel exemple de mise en oeuvre de l'invention peut permettre de diminuer l'énergie nécessaire pour effondrer la boîte crânienne, comparativement à une masse de forme convexe. Cela peut permettre de diminuer l'énergie de la charge explosive, par exemple.

Un dispositif selon l'invention peut permettre d'étourdir l'animal sans provoquer sa mort immédiate, ce qui peut être un avantage lorsque l'animal est destiné à être abattu d'une certaine manière, par exemple pour des consommateurs ayant des exigences particulières, notamment religieuses.

L'invention a encore pour objet un procédé d'étourdissement d'un animal destiné à être abattu, dans lequel on dispose sur la tête de l'animal un dispositif tel que défini plus haut, puis dans lequel on active le système de propulsion de la matrice.

L'énergie communiquée à la matrice peut être choisie de manière à ce que la portion découpée ne permette pas l'accès au cerveau.

L'invention a encore pour objet la matrice en tant que telle, agencée pour être fixée à un système de propulsion.

L'invention a encore pour objet, selon un autre de ses aspects, un dispositif d'étourdissement d'animaux, comportant :
- un impacteur à projeter contre la boîte crânienne de l'animal à étourdir,
- un système d'amortissement comportant une enceinte de contre-pression contenant un gaz qui est comprimé lors du déplacement de l'impacteur, de manière à opposer une force de rappel sur celui-ci.

Le dispositif peut comporter un système de contrôle de la pression dans l'enceinte de contre-pression.

Le système de contrôle de la pression peut être connecté à une arrivée de gaz, par exemple d'air, permettant de compenser les pertes dues par exemple aux fuites liées à une étanchéité insuffisante.

Le système peut comporter, dans le circuit d'alimentation en gaz, un clapet anti-retour.

Le système de propulsion de l'impacteur peut être agencé pour recevoir une charge explosive ou une décharge pneumatique.

L'impacteur peut être une broche ou une masse quelconque ou une matrice telle que définie plus haut.

Par ailleurs, le dispositif divulgué dans la demande WO 01/60168 comporte un dispositif de sécurité à billes. Ces dernières sont agencées pour venir s'engager dans des logements correspondants, prévus sur le porte-charge, sur une région filetée de celui-ci. Les billes ont tendance à abîmer le filetage à la longue, ce qui peut rendre le vissage de la culasse plus difficile. En outre, le remplacement des billes est relativement difficile.

L'invention a encore pour objet de remédier à cet inconvénient, indépendamment ou en combinaison avec ce qui précède. Elle y parvient grâce à un dispositif pour étourdir les animaux, comportant :
- un ensemble formant poignée,
- un percuteur mobile dans l'ensemble formant poignée,
- un organe de verrouillage mobile dans un premier logement de l'ensemble formant poignée contre l'action de rappel d'un organe de rappel élastique,
- un porte-cartouche sur lequel peut se visser l'ensemble formant poignée, comportant un deuxième logement débouchant en regard du premier logement lorsque le porte-cartouche est positionné dans une position permettant au percuteur d'impacter une cartouche présente dans le porte-cartouche. L'organe de verrouillage peut alors s'engager partiellement dans ce deuxième logement, ce qui assure le maintien en position armée et peut avertir l'utilisateur du bon fonctionnement relatif de l'ensemble formant poignée et du porte-cartouche.

Dans un exemple de mise en oeuvre, l'ensemble formant poignée comporte une culasse et un porte-culot reçu dans la culasse, le porte-culot logeant le percuteur, le premier logement étant réalisé dans ce porte-culot.

Dans un exemple de mise en oeuvre, l'organe de verrouillage est une bille, dont le diamètre est par exemple supérieur ou égal à 5 mm. L'organe de verrouillage peut être unique.

Un tel dispositif évite à l'organe de verrouillage d'endommager le filetage du porte-cartouche et de plus facilite le remplacement de l'organe de verrouillage.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 est une vue en élévation d'un exemple de dispositif conforme à l'invention,
- la figure 2 est une coupe longitudinale du dispositif de la figure 1,
- la figure 3 est une vue en éclaté du dispositif des figures 1 et 2,
- la figure 4 illustre l'utilisation du dispositif des figures 1 et 2,
- les figures 5 à 9 illustrent des variantes de réalisation de la matrice,
- la figure 10 est une coupe longitudinale d'un dispositif connu,
- la figure 11 est une coupe longitudinale d'une variante de réalisation, et
- la figure 12 est une coupe longitudinale schématique d'une autre variante de réalisation.

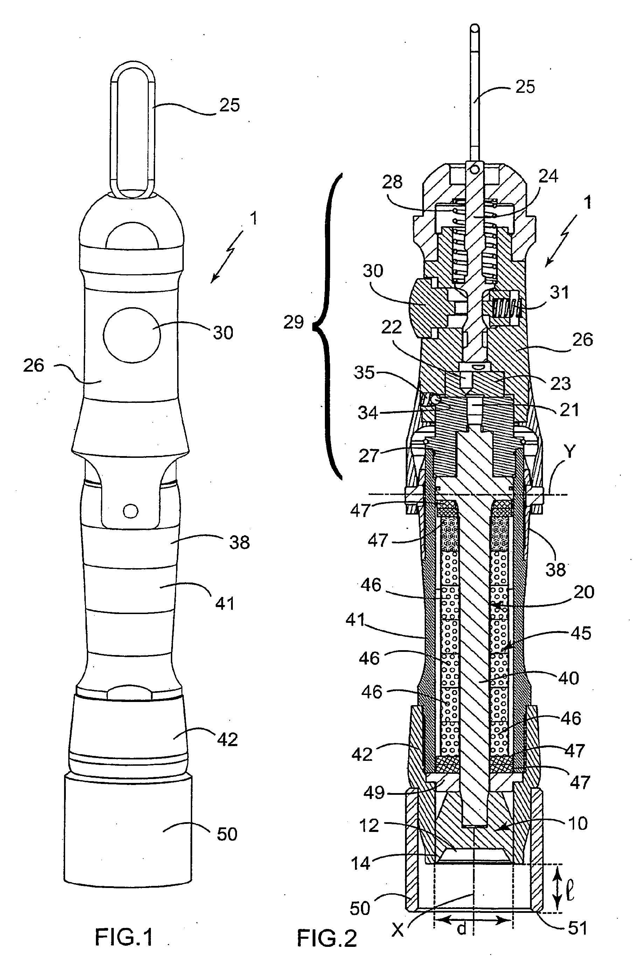

On a illustré aux figures 1 à 3 un dispositif d'étourdissement comportant une matrice 10 destinée à être projetée selon un axe X contre la boîte crânienne d'un animal à étourdir et un système de propulsion 20 de cette matrice 10.

La matrice 10 présente une zone destinée à exercer une pression sur l'animal, de diamètre extérieur d supérieur à 20 mm, par exemple supérieur à 25 mm, voire à 30 mu et inférieur à 35 mm. Il est par exemple de l'ordre de 32 mm si le dispositif est destiné à être utilisé sur certains bovins, mais pourrait être inférieur ou supérieur en fonction de la race de l'animal, de sa taille et de son âge.

La matrice 10 présente une surface en creux 12 du côté destiné à percuter la boîte crânienne de l'animal à étourdir, délimitée radialement par une arête 14, de forme annulaire dans l'exemple considéré.

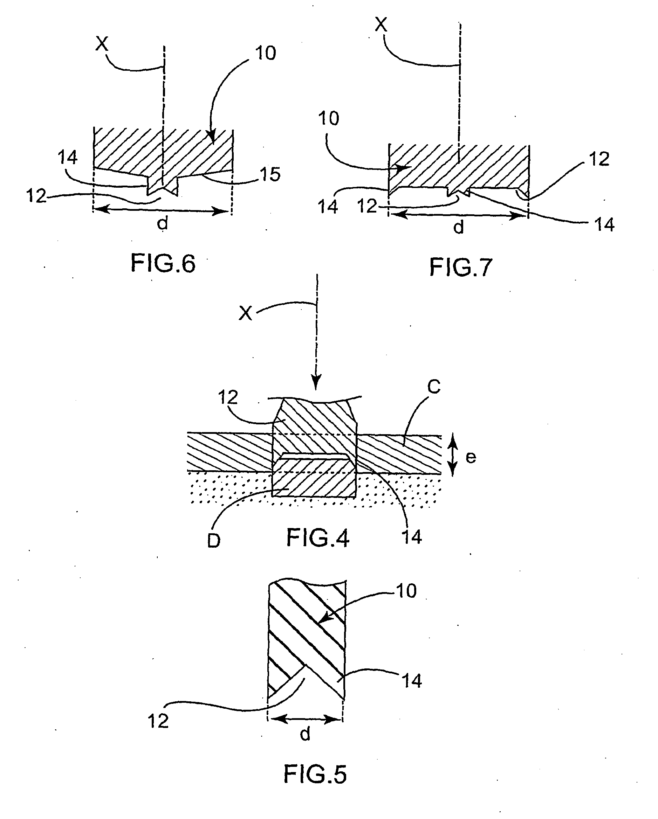

La présence de l'arête 14 permet à la matrice de se comporter comme un emporte-pièce et de découper, comme illustré à la figure 4, une partie D de la boîte crânienne C.

La section relativement grande de la matrice 10 permet d'exercer une pression sur la partie découpée D, qui est enfoncée vers le cerveau de l'animal mais peut rester engagée dans l'épaisseur de la boîte crânienne.

La partie découpée D se comporte alors en quelque sorte comme un bouchon qui limite l'accès au cerveau. Le choc provoqué par l'enfoncement de la partie D est néanmoins suffisant pour anesthésier durablement et efficacement l'animal.

• La surface en creux 12 est de forme tronconique dans l'exemple de la figure 2 mais pourrait présenter une forme différente sans que l'on sorte du cadre de la présente invention, par exemple, comme illustré à la figure 5, une forme conique. Une telle forme peut s'avérer plus facile à usiner.

Dans l'exemple des figures 2 et 4, l'arête 14 se situe à la périphérie de la matrice 10, celle-ci présentant par exemple une forme cylindrique de révolution d'axe X.

L'arête 14 peut être définie par exemple par l'intersection de deux surfaces coniques ou d'une surface conique et d'une surface cylindrique, aux congés de fabrication près, de façon à être relativement coupante. Néanmoins, on ne sort pas du cadre de la présente invention lorsque l'arête 14 se présente par exemple sous la forme d'une nervure cylindrique dont l'extrémité est arrondie ou plate.

L'arête 14 peut encore être disposée en retrait de la périphérie de la matrice, comme illustré à la figure 6.

Dans l'exemple de cette figure, l'arête 14 est entourée par une surface annulaire 15 qui est par exemple légèrement conique, divergeant en éloignement de l'arête 14.

Cette surface annulaire 15 vient en appui contre la région de bord de la partie découpée par l'arête 14 et en provoque l'effondrement, la région de bord entourant la partie découpée étant fragilisée du fait de la découpe effectuée.

Dans l'exemple de la figure 7, la matrice 10 comporte deux arêtes 14, l'une disposée à la périphérie de la matrice et l'autre située en retrait de sa périphérie. Ces deux arêtes 14 délimitent entre elles une surface en creux 12 qui est par exemple sensiblement perpendiculaire à l'axe X.

La forme et la dimension de la matrice, notamment son diamètre d'impact, peuvent être choisies en fonction de l'animal, par exemple de sa race ou de sa taille, et de la vitesse avec laquelle la matrice est projetée.

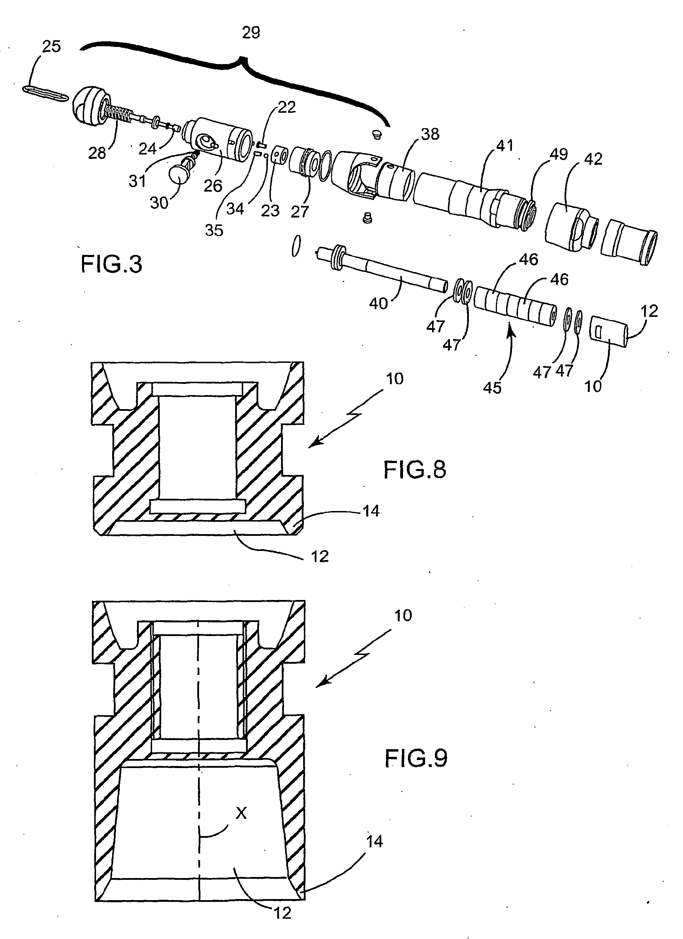

A titre d'exemple, on a illustré aux figures 8 et 9 deux exemples de réalisation de matrice, respectivement destinés à être utilisés l'un pour des moutons ou veaux et l'autre pour des jeunes bovins ou vaches. Les deux matrices diffèrent par la profondeur de la surface en creux.

La matrice plus particulièrement destinée aux jeunes bovins et vaches, illustrée à la figure 9, est très creuse afin de permettre à la matière découpée de fluer dans la surface en creux et d'éviter ainsi un écrasement de matière dû au fait que le crâne est plus épais chez le jeune bovin et la vache. Cela permet de limiter le recul du dispositif, ce qui pourrait nuire à l'efficacité de l'étourdissement.

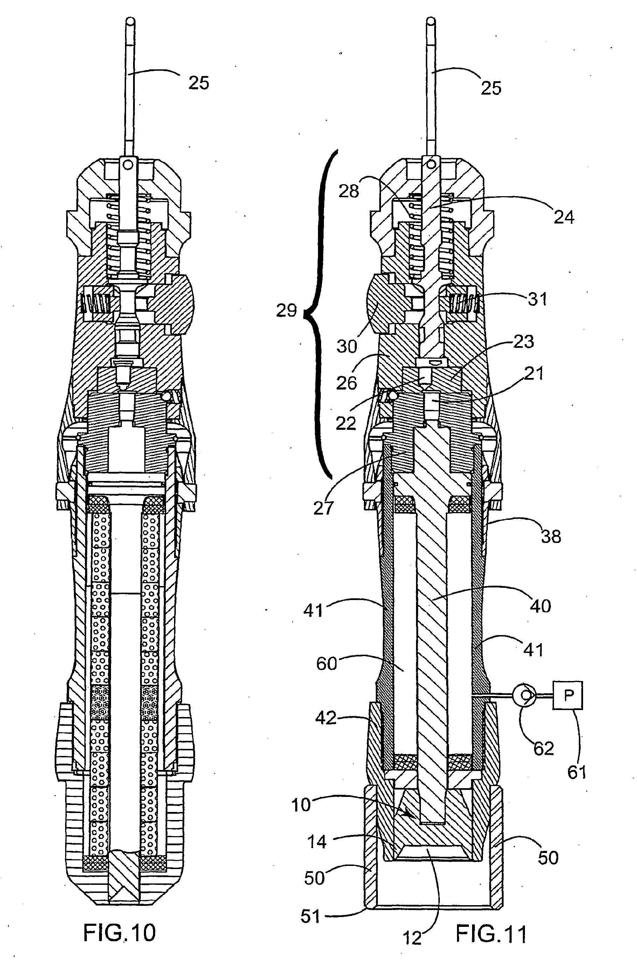

On a représenté à la figure 10 un dispositif connu comportant une broche perforante de faible diamètre, qui peut provoquer, lorsqu'elle est projetée sur la tête de l'animal, la perforation de la boîte crânienne et l'endommagement du cerveau.

La matrice peut être projetée par tout système de propulsion, qu'il soit mécanique, hydraulique ou pneumatique, par exemple à charge explosive ou à air comprimé, cette liste n'étant pas limitative.

A titre d'exemple, le système de propulsion 20 illustré à la figure 1 comporte un ensemble formant poignée 29 comportant une culasse 26 et un marteau de percussion 24 mobile dans la culasse 26.

Le système de propulsion 20 comporte également un porte-cartouche 27 destiné à recevoir une charge explosive 21 dont l'explosion peut être provoquée par un percuteur 22, encore appelé culot, disposé dans un porte-culot 23 logé dans la culasse 26 et entraîné par le marteau de percussion 24.

Le déplacement de ce dernier sous l'effet d'un ressort 28 est déclenché par l'action de l'utilisateur sur une gâchette 30, dont le retour est assuré par un ressort 31. L'armement du dispositif peut être assuré au moyen d'un cordon d'armement 25 dépassant à l'extérieur de l'ensemble formant poignée 26.

Le verrouillage du dispositif est assuré par exemple au moyen d'au moins une bille de verrouillage 34 et d'un ressort de verrouillage 35, de la manière décrite dans la demande internationale WO 01/60268, ou de la manière qui est détaillée plus loin.

L'explosion de la charge 21 entraîne la projection selon l'axe X d'une broche 40 à l'extrémité de laquelle est vissée la matrice 10, cette broche 40 se déplaçant dans un canon 41 et dans une rallonge de canon 42 vissée sur celui-ci. En variante, la matrice 10 peut être soudée à la broche 40 ou réalisée d'une seule pièce par usinage avec celle-ci.

Le chargement du dispositif peut être effectué en entraînant en rotation l'ensemble formant poignée 26 par rapport au canon 41 autour d'un axe de rotation Y, après dévissage d'une bague d'accouplement 38.

Un système d'amortissement 45 comportant, dans l'exemple décrit, une pluralité d'anneaux 46 en élastomère, assure le freinage et le retour de la broche 40.

Les anneaux 46 sont empilés les uns sur les autres le long de la broche 40 dans le canon 41 et sont retenus aux extrémités de la pile par des rondelles 47, au nombre de deux par exemple à chaque extrémité. Un joint de blocage 49 est disposé entre le canon 41 et la rallonge de canon 42.

Les anneaux 46 et les rondelles 47 peuvent, le cas échéant, être fendus pour faciliter leur mise en place, notamment en cas de matrice 10 soudée à la broche 4 ou réalisée de façon monolithique avec celle-ci.

Le système d'amortissement 45 peut encore comporter un ou plusieurs ressorts ou, en variante, un système de contre-pression pneumatique, comme illustré de manière schématique à la figure 11.

Le dispositif représenté sur cette figure comporte une enceinte de contre-pression 60 qui est par exemple située dans le canon 41, à l'emplacement des anneaux 46.

Le gaz, par exemple de l'air, présent dans cette enceinte, est comprimé par l'avancement de la broche 40 lors du fonctionnement du dispositif.

Le dispositif comporte également un système 61 de contrôle de la pression du gaz présent dans l'enceinte 60, de façon à assurer le freinage recherché de la broche 40.

Le système de contrôle 61 peut être agencé pour maintenir une pression prédéfinie dans l'enceinte 60 et compenser des fuites de gaz liées à une étanchéité insuffisante.

Il peut être connecté à une arrivée de gaz, par exemple d'air.

Le système de contrôle 61 peut comporter un clapet anti-retour 62 s'ouvrant vers l'enceinte 60. Ce clapet 62 est fermé lors de la réduction du volume de l'enceinte 60.

Le système d'amortissement illustré à la figure 11 peut présenter certains avantages par rapport aux systèmes illustrés aux figures 2 ou 10.

Il peut par exemple exiger une maintenance moins importante, de par l'absence de remplacement des anneaux 46, et peut permette l'utilisation d'une charge plus faible. De plus, la pression dans l'enceinte peut être facilement modifiée, ce qui peut permettre de régler l'amortissement assez aisément.

Dans l'exemple illustré à la figure 11, la connexion dù système de contrôle 45 à l'enceinte 60 a été représentée très schématiquement et il va de soi que ce raccordement peut s'effectuer de multiples manières.

Le dispositif peut comporter, comme illustré aux figures 1 et 2, un espaceur 50 agencé pour être appliqué contre la tête de l'animal afin d'écarter initialement la matrice 10 d'une distance prédéfinie *l* de la tête de l'animal. Cette distance *l* est choisie de façon à obtenir la vitesse de contact souhaitée entre la matrice et la boîte crânienne de l'animal et contrôler la pénétration de la matrice dans la boîte crânienne.

L'espaceur 50 est par exemple vissé sur la rallonge de canon 42.

La distance *l* est par exemple comprise entre 10 et 45 mm, notamment entre 15 et 40 mm, étant choisie par exemple en fonction de la résistance et de l'épaisseur e de la boîte crânienne.

La distance *l* peut par exemple être choisie plus faible lorsque la boîte crânienne de l'animal est relativement solide, par exemple pour les taureaux, et plus grande pour les animaux dont la boîte crânienne est plus fragile, par exemple les jeunes génisses, de façon à ce que la vitesse d'impact soit moindre.

L'utilisateur peut par exemple disposer de plusieurs écarteurs de différentes longueurs et monter sur le dispositif celui adapté à l'animal à étourdir.

En variante, l'écarteur peut être monté de manière réglable sur le canon ou sa rallonge. L'écarteur peut par exemple être vissé plus ou moins sur le dispositif selon le recul recherché. Le dispositif peut éventuellement comporter un curseur permettant de régler la distance *l* et la vitesse de projection de la matrice en fonction de l'animal à étourdir.

La longueur de l'espaceur peut aussi influer sur la profondeur d'enfoncement de la portion découpée D dans la tête de l'animal, laquelle est par exemple comprise entre 1 et 10 mm, selon l'animal.

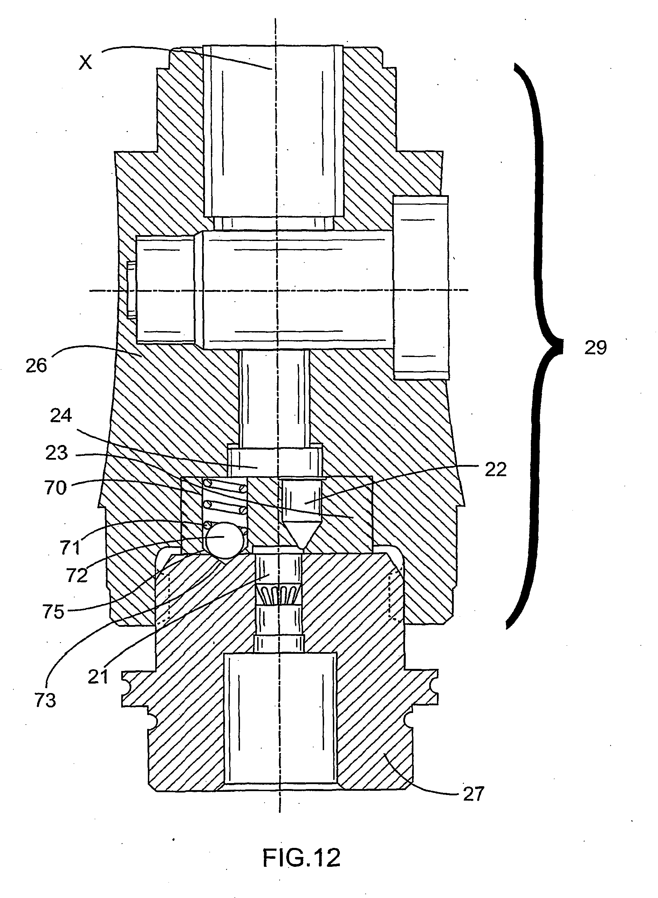

La figure 12 représente partiellement un dispositif comportant des moyens de verrouillage perfectionnés.

Dans cet exemple, le porte-culot 23 comporte un logement 70, d'axe parallèle à l'axe longitudinal du dispositif, excentré par rapport à celui-ci et logeant un ressort 71 et un organe de verrouillage 72 constitué par exemple d'une bille.

Le porte-cartouche 27 comporte un logement correspondant 73 venant, lorsque le percuteur 22 est dans la position armée, se positionner en regard du logement 70, de telle sorte que l'organe de verrouillage 72 peut s'y engager partiellement, comme illustré. Ce dernier est retenu dans le logement 70 grâce à un rétreint 75 définissant une ouverture de diamètre inférieur à celui de l'organe de sécurité 72.

L'expression « comportant un » doit être comprise comme étant synonyme de « comportant au moins un », sauf si le contraire est spécifié.

## Revendications

1. Dispositif d'étourdissement d'animaux destinés à être abattus, comportant une matrice (10) destinée à être projetée contre la boîte crânienne de l'animal à étourdir, présentant un diamètre d'impact supérieur à 20 mm et, du côté destiné à être projeté contre la boîte crânienne, au moins une surface en creux (12).

2. Dispositif d'étourdissement comportant :
- une matrice destinée à être projetée contre la boîte crânienne de l'animal à étourdir, présentant un diamètre d'impact supérieur à 20 mm et au moins une arête (14) formant saillie du côté destiné à être projeté contre la boîte crânienne.

3. Dispositif selon la revendication 1, comportant une arête (14) à la périphérie de la surface en creux (12).

4. Dispositif selon l'une des revendications 2 ou 3, dans lequel l'arête est située à la périphérie de la matrice (10).

5. Dispositif selon l'une des revendications 2 ou 3, dans lequel l'arête (14) est disposée en retrait de la périphérie de la matrice (10).

6. Dispositif selon la revendication 1, dans lequel la surface en creux (12) comporte un évidement conique.

7. Dispositif selon l'une quelconque des revendications précédentes, dans lequel la matrice (10) présente un diamètre d'impact supérieur à 25 mm, voire à 30 mm.

8. Dispositif selon l'une quelconque des revendications précédentes, dans lequel la matrice (10) présente un diamètre d'impact inférieur à 35 mm.

9. Dispositif selon l'une quelconque des revendications précédentes, dans lequel la surface en creux a une profondeur comprise entre 1 et 25 mm.

10. Dispositif selon l'une quelconque des revendications précédentes, dans lequel la surface en creux a une profondeur comprise entre 1 et 10 mm.

11. Dispositif selon l'une quelconque des revendications 1 à 9, dans lequel la surface en creux a une profondeur comprise entre 10 et 25 mm.

12. Dispositif selon l'une quelconque des revendications précédentes, comportant un système de propulsion de la matrice (10) agencé pour recevoir une charge explosive (21).

13. Dispositif selon l'une quelconque des revendications précédentes, comportant un espaceur (50) agencé pour être appliqué contre la tête de l'animal afin d'écarter la matrice (10) de la tête de l'animal d'une distance prédéfinie (d), notamment comprise entre 10 et 45 mm, mieux entre 15 et 40 mm.

14. Procédé d'étourdissement d'un animal destiné à être abattu, dans lequel on dispose sur la tête de l'animal un dispositif selon l'une quelconque des revendications précédentes, puis dans lequel on active un système de propulsion (20) de la matrice de manière à la projeter contre la boîte crânienne avec une énergie permettant de découper une portion (D) de celle-ci.

15. Procédé selon la revendication précédente, dans lequel l'énergie est choisie de manière à ce que la portion découpée (D) ne permette pas l'accès au cerveau.

16. Dispositif d'étourdissement d'animaux comportant :
- un impacteur à projeter contre la boîte crânienne de l'animal à étourdir,
- un système d'amortissement comportant une enceinte de contre-pression contenant un gaz qui est comprimé lors du déplacement de l'impacteur de manière à opposer une force de rappel sur celui-ci, le dispositif comportant un système (45) de contrôle de la pression dans l'enceinte de contre-pression (60), comportant un clapet anti-retour (62).

17. Dispositif selon la revendication précédente, comportant un système de propulsion (20) de l'impacteur, agencé pour recevoir une charge explosive.

18. Dispositif selon l'une quelconque des deux revendications précédentes, dans lequel l'impacteur est une broche ou une masse quelconque ou une matrice (10) telle que définie dans l'une quelconque des revendications 1 à 13.

19. Matrice destinée à être projetée contre la boîte crânienne d'un animal à étourdir, comportant des moyens pour sa fixation sur un système de propulsion et étant telle que définie dans l'une quelconque des revendications 1 à 13.

20. Dispositif pour étourdir les animaux, comportant :
- un ensemble (29) formant poignée,
- un percuteur (22) mobile dans l'ensemble formant poignée,
- un organe de verrouillage (72) mobile dans un premier logement (70) de l'ensemble formant poignée contre l'action de rappel d'un organe de rappel élastique,
- un porte-cartouche (27) sur lequel peut se visser l'ensemble formant poignée, comportant un deuxième logement (73) débouchant en regard du premier logement lorsque le porte-cartouche est positionné dans une position armée permettant au percuteur d'impacter une cartouche présente dans le porte-cartouche, l'organe de verrouillage (72) s'engageant alors partiellement dans ce deuxième logement.

21. Dispositif selon la revendication 1, comportant des moyens de verrouillage en position armée tels que définis à la revendication précédente.

## Claims

1. Device for stunning animals to be slaughtered, comprising a punch (10) intended to be projected against the skull of the animal to be stunned, with an impact diameter greater than 20 mm, and at least one concave surface (12) on the side intended to be projected against the skull.

2. Stunning device comprising:
- a punch intended to be projected against the skull of the animal to be stunned, with an impact diameter greater than 20 mm, and at least one ridge (14) protruding from the side intended to be projected against the skull.

3. Device according to claim 1, comprising a ridge (14) on the periphery of the concave surface (12).

4. Device according to any of claims 2 or 3, in which the ridge is located on the periphery of the punch (10).

5. Device according to any of claims 2 or 3, in which the ridge is located set back from the periphery of the punch (10).

6. Device according to claim 1, in which the convex surface (12) comprises a conical recess.

7. Device according to any of the preceding claims, in which the punch (10) has an impact diameter greater than 25 mm, even greater than 30 mm.

8. Device according to any of the preceding claims, in which the punch (10) has an impact diameter less than 35 mm.

9. Device according to any of the preceding claims, in which the concave surface has a depth between 1 and 25 mm.

10. Device according to any of the preceding claims, in which the concave surface has a depth between 1 and 10 mm.

11. Device according to any of claims 1 to 9, un which the concave surface has a depth between 10 and 25 mm.

12. Device according to any of the preceding claims, comprising a propulsion system for the punch (10) designed to receive an explosive charge (21).

13. Device according to any of the preceding claims, comprising a spacer (50) intended to be applied against the head of the animal in order to space the punch (10) from the head of the animal by a predefined distance (d), in particular between 10 and 45 mm, preferably between 15 and 40 mm.

14. Method for stunning an animal intended to be slaughtered, in which on the head of the animal is arranged a device according to any of the preceding claims, then in which a propulsion system (20) for the punch is activated so as to project this against the skull with an energy allowing a portion (D) thereof to be cut away.

15. Method according to the preceding claim, in which the energy is selected such that the cut portion (D) does not allow access to the brain.

16. Device for stunning animals, comprising:
- an impacter to be projected against the skull of the animal to be stunned,
- a damper system comprising a back-pressure chamber containing a gas which is compressed on movement of the impacter so as to oppose a return force thereon, the device comprising a system (45) for controlling the pressure in the back-pressure chamber (60), comprising a non-return valve (62).

17. Device according to the preceding claim, comprising a propulsion system (20) for the impacter, designed to receive an explosive charge.

18. Device according to any one of the two preceding claims, in which the impacter is a spindle or any arbitrary mass or a punch (10) as defined in any of claims 1 to 13.

19. Punch intended to be projected against the skull of an animal to be stunned, comprising means for its fixing onto a propulsion system and as defined in any of claims 1 to 13.

20. Device for stunning animals, comprising:
- an assembly (29) forming a handle,
- a striking pin (22) mobile in the assembly forming the handle,
- a locking element (72) mobile in a first housing (70) of the assembly forming the handle, against the return action of a resilient return element,
- a cartridge holder (27) on which the assembly forming the handle can be screwed, comprising a second housing (73) opening opposite the first housing when the cartridge holder is positioned in an armed position allowing the striking pin to strike a cartridge present in the cartridge holder, the locking element (72) then partly engaging in this second housing.

21. Device according to claim 1, comprising means of locking in the armed position as defined in the preceding claim.

## Patentansprüche

1. Betäubungsvorrichtung für Schlachttiere mit einer gegen den Schädel des zu betäubenden Tieres zu schleudernden Matrize (10), die einen Aufpralldurchmesser von über 20 mm hat und an der Seite, die auf den Schädel auftreffen soll, mindestens einer Hohlfläche (12) aufweist.

2. Betäubungsvorrichtung mit einer gegen den Schädel des zu betäubenden Tieres zu schleudernden Matrize, die einen Aufpralldurchmesser von über 20 mm hat und an der Seite, die auf den Schädel auftreffen soll, mindestens eine vorspringende Kante (14) aufweist.

3. Vorrichtung nach Anspruch 1 mit einer Kante (14) am Rand der Hohlfläche (12).

4. Vorrichtung nach einem der Ansprüche 2 oder 3, wobei die Kante (14) am Rand der Matrize (10) liegt.

5. Vorrichtung nach einem der Ansprüche 2 oder 3, wobei die Kante (14) gegenüber dem Rand der Matrize (10) zurückspringt.

6. Vorrichtung nach Anspruch 1, wobei die Hohlfläche (12) eine konische Aussparung aufweist.

7. Vorrichtung nach einem der vorhergehenden Ansprüche, wobei die Matrize (10) einen Aufpralldurchmesser von über 25 mm oder gar 30 mm hat.

8. Vorrichtung nach einem der vorhergehenden Ansprüche, wobei die Matrize (10) einen Aufpralldurchmesser von unter 35 mm hat.

9. Vorrichtung nach einem der vorhergehenden Ansprüche, wobei die Hohlfläche eine Tiefe zwischen 1 und 25 mm hat.

10. Vorrichtung nach einem der vorhergehenden Ansprüche, wobei die Hohlfläche eine Tiefe zwischen 1 und 10 mm hat.

11. Vorrichtung nach einem der Ansprüche 1 bis 9, wobei die Hohlfläche eine Tiefe zwischen 10 und 25 mm hat.

12. Vorrichtung nach einem der vorhergehenden Ansprüche mit einem zur Aufnahme einer explosiven Ladung (21) eingerichteten System zum Antrieb der Matrize (10).

13. Vorrichtung nach einem der vorhergehenden Ansprüche mit einem Abstandhalter (50), der zum Ansetzen am Kopf des Tieres eingerichtet ist, um die Matrize (10) vom Kopf des Tieres um einen vorbestimmten Abstand (d) zu entfernen, der insbesondere zwischen 10 und 45 mm, vorzugsweise zwischen 15 und 40 mm, liegt.

14. Verfahren zum Betäuben eines Schlachttieres, bei dem am Kopf des Tieres eine Vorrichtung gemäß einem der vorhergehenden Ansprüche angeordnet und dann ein System (20) zum Antrieb der Matrize derart aktiviert wird, dass sie gegen den Schädel mit einer Energie geschleudert wird, die ausreicht, um einen Teil (D) daraus herauszubrechen.

15. Verfahren nach Anspruch 14, wobei die Energie so gewählt wird, dass der herausgebrochene Teil (D) keinen Zugang zum Gehirn schafft.

16. Betäubungsvorrichtung für Tiere mit
einem gegen den Schädel des zu betäubenden Tieres zu schleudernden Aufprallelement,
einem Dämpfungssystem mit einem Druckmantel, der ein Gas enthält, das während der Bewegung des Aufprallelementes komprimiert wird, um einer Rückstellkraft entgegenzuwirken, wobei die Vorrichtung in dem Druckmantel (60) ein Druckregelsystem (45) mit Rückschlagventil (62) enthält.

17. Vorrichtung nach dem vorhergehenden Anspruch mit einem zur Aufnahme einer explosiven Ladung eingerichteten Antriebssystem (20) des Aufprallelements.

18. Vorrichtung nach einem der vorhergehenden Ansprüche, wobei das Aufprallelement ein Dorn oder irgendeine Masse oder eine Matrize (10) nach einem der Ansprüche 1 bis 13 ist.

19. Matrize nach einem der Ansprüche 1 bis 13, die dazu bestimmt ist, gegen den Schädel eines zu betäubenden Tieres geschleudert zu werden, und eine Einrichtung zu ihrer Befestigung an einem Antriebssystem aufweist.

20. Vorrichtung zum Betäuben von Tieren mit
einer einen Griff bildenden Baugruppe (29),
einem in dieser beweglichen Schlagbolzen (22),
einem Verriegelungselement (72), das in einem ersten Raum (70) der den Griff bildenden Baugruppe entgegen der Rückstellwirkung eines elastischen Rückstellelementes beweglich ist, und
einem Patronenträger (27), auf den die den Griff bildende Baugruppe geschraubt werden kann, mit einem zweiten Raum (73), der zum ersten Raum hin offen ist, wenn der Patronenträger in eine geladene Stellung gebracht ist, und der es ermöglicht, dass der Schlagbolzen auf eine im Patronenträger vorhandene Patrone aufschlägt, wobei das Verriegelungselement (72) teilweise in den zweiten Raum eingreift.

21. Vorrichtung nach Anspruch 1 mit einer Verriegelungseinrichtung nach Anspruch 20 in gespannter Stellung.
